(19) **Europäisches Patentamt**
**European Patent Office**
**Office européen des brevets**

(11) **EP 2 557 210 B1**

(12) **EUROPEAN PATENT SPECIFICATION**

(45) Date of publication and mention
of the grant of the patent:
**12.10.2016 Bulletin 2016/41**

(21) Application number: **11762972.5**

(22) Date of filing: **25.03.2011**

(51) Int Cl.:
*D03D 1/02* *(2006.01)*    *D03D 15/00* *(2006.01)*
*D06M 15/564* *(2006.01)*    *D06C 3/00* *(2006.01)*
*B60R 21/16* *(2006.01)*    *B60R 21/235* *(2006.01)*
*D06N 3/00* *(2006.01)*    *D06N 3/10* *(2006.01)*
*D06N 3/14* *(2006.01)*    *D06N 3/12* *(2006.01)*

(86) International application number:
**PCT/KR2011/002084**

(87) International publication number:
**WO 2011/122800 (06.10.2011 Gazette 2011/40)**

(54) **POLYESTER FABRIC AND METHOD FOR MANUFACTURING SAME**

POLYESTERGEWEBE UND VERFAHREN ZU SEINER HERSTELLUNG

TISSU POLYESTER ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.06.2010 KR 20100061470**
**30.03.2010 KR 20100028701**

(43) Date of publication of application:
**13.02.2013 Bulletin 2013/07**

(73) Proprietor: **Kolon Industries, Inc.**
**Gwacheon-si, Gyeonggi-do 13837 (KR)**

(72) Inventors:
- **KIM, Jae-Hyung**
 **Gumi-si**
 **Gyeongsangbuk-do 730-796 (KR)**
- **KWAK, Dong-Jin**
 **Daegu 706-180 (KR)**
- **KIM, Ki-Jeong**
 **Yeongcheon-si**
 **Gyeongsangbuk-do 770-090 (KR)**

- **KIM, Hee-Jun**
 **Daegu 702-758 (KR)**
- **YOUN, Jung-Hoon**
 **Gumi-si**
 **Gyeongsangbuk-do 730-140 (KR)**
- **LEE, Sang-Mok**
 **Gumi-si**
 **Gyeongsangbuk-do 730-020 (KR)**

(74) Representative: **Ter Meer Steinmeister & Partner
Patentanwälte mbB
Nymphenburger Straße 4
80335 München (DE)**

(56) References cited:
EP-A1- 2 042 628    WO-A2-2010/027228
WO-A2-2010/123298    DE-A1- 4 401 003
JP-A- 6 024 284    KR-A- 950 011 677
KR-A- 20090 030 727    KR-B1- 100 546 462
US-A1- 2006 252 322    US-A1- 2007 184 733

**Description**

**FIELD OF THE INVENTION**

The present invention relates to an airbag fabric and a preparation method for the same, and more particularly to a polyester fabric, a preparation method for the same, and an airbag for vehicle comprising the same, where the polyester fabric comprises a low-modulus polyester fiber having high strength and high elongation to impart high toughness and high energy absorption performance.

**BACKGROUND OF THE INVENTION**

Generally, an airbag refers to a vehicle safety device for providing protection to the occupants during a frontal vehicle collision at an impact speed of about 40 km/h or above by deploying explosive chemicals to generate a gas and inflate the airbag cushion upon sensing a crash with a crash impact sensor.

The requirements for airbag fabrics are low air permeability to facilitate airbag unfolding, high strength and high thermal resistance to protect the airbag from damage or rupture, and high flexibility to reduce impacts on occupants.

Particularly, an airbag for automobile, manufactured in a defined dimension, can be folded into the steering wheel, the door panel, and so forth in the vehicle to reduce its volume to the minimum and then inflated to unfold when the inflator is in operation.

It is therefore of a great importance that the airbag fabric secures good mechanical properties, good folding property, and high flexibility to reduce impacts on the occupants, with a view to effectively maintaining folding and packing properties of the airbag while packing the airbag into the vehicle, preventing damage or rupture of the airbag, acquiring high unfolding performance of the airbag cushion and minimizing impacts on the occupants. In fact, there have never been suggested airbag fabrics capable of maintaining excellences in air sealing effect and flexibility for the occupant's safety, sufficiently enduring impacts on the airbag, and being packed into a vehicle effectively.

Conventionally, polyamide fibers such as nylon 66 have been used as a material for airbag fabric. Despite high impact resistance, nylon 66 is inferior to polyester fibers in regard to resistance to heat and humidity, light resistance, and dimensional stability, and more expensive.

Japanese Patent Publication No. Hei 04-214437 discloses the use of a polyester fiber overcoming these problems. However, the use of the conventional polyester fiber in the manufacture of an airbag leads to difficulty in packing the airbag into a small space in a vehicle due to extremely high stiffness, excessive thermal shrinkage during heat treatment at high temperature due to high elasticity and low elongation, and limitations in maintaining good mechanical properties and unfolding performance under severe conditions of high temperature and high humidity.

WO2010123298 (A2) relates to a fabric for an airbag, including polyester yarn, and particularly, to a polyester fabric for an airbag, including a polyester yarn with a toughness of 70 to 95 $J/m^3$, said fabric having a toughness of 3.5 to 6.0 $kJ/m^3$ and a tearing strength of 18 to 30 kgf, as measured by the ASTM D 2261 TONGUE method, to a method for manufacturing same, and to a vehicle airbag including same. This prior art document falls within the terms of Article 54(3) EPC.

DE 44 01 003 A1 relates to a process for producing uncoated woven fabrics from synthetic yarn for an airbag, the process comprising the steps of: (a) producing a woven fabric from high tenacity polyester filament yarn having a filament linear density of not more than 5 dtex, a yarn linear density within the range from 250 to 550 dtex, a hot air shrinkage at 200 °C of less than 9% and a boil off shrinkage of less than 2%, (b) washing the fabric at temperatures of less than 60 °C, and (c) drying the washed fabric at temperatures of less than 170 °C under conditions so that the dimensions of the fabric, based on its dimensions prior to washing, do not change at all or by less than 2% in warp and weft directions.

WO2010027228 (A2) relates to a fabric for an airbag, in particular, a fabric for an airbag comprising the polyester fiber, and a method of preparing the same, wherein the fabric for the airbag is prepared by using a polyester fiber having the cross-section thereof in a flat shape, wherein the flatness of the cross-section of the polyester fiber is from 1.3 to 3.0 and a coefficient of variation (CV%) in the total filaments of the polyester fiber is 20% or less.

Accordingly, there is a need for developing a fabric capable of maintaining good mechanical properties and air sealing effect to be suitable for use in airbags for vehicle and providing excellences in flexibility to reduce impacts on occupants, packing property, and an ability to maintain good properties under severe conditions of high temperature and high pressure.

**SUMMARY OF THE INVENTION**

It is an object of the present invention to provide a polyester fabric suitable for use in airbags that secures excellences in mechanical properties, flexibility, and packing property, and maintains high performance under severe conditions of high temperature and high humidity.

It is another object of the present invention to provide a method for preparing the polyester fabric.

It is still another object of the present invention to provide an airbag for vehicle comprising the polyester fabric.

To achieve the objects of the present invention, there is provided a polyester fabric for an airbag according to claim 1, the polyester fabric having a stiffness of 11.8 N (1.2 kgf) or less as measured according to ASTM D 4032 method, a tensile strength $T_1$ of at least 36.7 kN/m (95 kgf/inch) as measured according to ASTM D 5034 method, and a tear strength $T_2$ of at least 64 N (6.5 kgf) as measured according to ASTM D 2261 TONGUE method, wherein the ratio $T_1/T_2$ of the tensile strength $T_1$ to the tear strength $T_2$ is defined by the following calculation formula 1; wherein the polyester fabric has a warp edge comb resistance $E_1$ of at least 200 N as measured at room temperature according to ASTM D 6479 method, and a weft edge comb resistance $E_2$ of at least 200 N as measured at room temperature according to ASTM D 6479 method, wherein the sum of the warp edge comb resistance $E_1$ and the weft edge comb resistance $E_2$ is defined by the following calculation formula 2:

$$[\text{Calculation Formula 1}]$$

$$4.0 \leq T_1/T_2 \leq 16.5$$

$$[\text{Calculation Formula 2}]$$

$$400 \leq E_1 + E_2 \leq 900$$

wherein $T_1$ is the warp tensile strength (kN/m) of the polyester fabric; and $T_2$ is the warp tear strength (N) of the polyester fabric; $E_1$ is the warp edge comb resistance (N) of the polyester fabric; and $E_2$ is the weft edge comb resistance (N) of the polyester fabric; and

wherein the polyester fabric is woven and comprises a polyester fiber having a fineness of 22.2 to 43.9 tex (200 to 395 denier), and having Young's modulus at 1% elongation in the range of 6.6 to 8.4 N/tex (75 to 95 g/de), and Young's modulus at 2% elongation in the range of 2.2 to 4.8 N/tex (25 to 55 g/de), wherein the Young's modulus is measured according to ASTM D 885 method.

There is also provided a method according to claim 11 for preparing the polyester fabric as claimed in any one of claims 1 to 10, comprising:

weaving a polyester fiber having a fineness of 22.2 to 43.9 tex (200 to 395 denier) into a grey fabric for airbag; scouring the grey fabric for airbag; and

tentering the scoured fabric at a heat treatment temperature of 140 to 210 °C, and

wherein the polyester fiber has a tensile strength of 76 cN/tex (8.6 g/d) or greater, a breaking elongation of 14 % or greater, and a dry shrinkage of 1.0 % or greater..

Further, there is provided an airbag for vehicle comprising the polyester fabric as claimed in any one of claims 1 to 10.

Hereinafter, a detailed description will be given as to a polyester fabric, a preparation method for the same, and an airbag for vehicle comprising the same in accordance with specified embodiments of the present invention, which are given by way of illustration only and not intended to limit the scope of the present invention.

Unless stated otherwise, the terms "comprises", "comprising", "includes" and/or "including" as used herein specify the presence of stated elements (or components) without any specific limitations but do not preclude the addition of other elements (or components).

The term "airbag fabric" as used herein refers to a woven or nonwoven fabric used in the manufacture of airbags for vehicle. The airbag fabrics used in common include a plain woven fabric of Nylon 6 which is woven with a Rapier spinning machine, or a nonwoven fabric of Nylon 6. But, the airbag fabric of the present invention uses a polyester fiber and thus features excellences in properties, such as dimensional stability, air permeability, and stiffness.

To use a polyester fiber as a fiber for airbag instead of a polyamide fiber such as Nylon 66 that has been used in the prior art, it is required to overcome the problems in association with the use of the polyester fiber, including deterioration of the folding property resulting from high modulus and high stiffness of the polyester fiber, deterioration of properties under severe conditions of high temperature and high humidity, caused by low melting heat capacity, and the consequent deterioration of the unfolding performance.

Compared with Nylon, the polyester fiber exhibits higher stiffness pertaining to its specific molecular structure and thus features higher Young's modulus. Hence, the use of the polyester fiber in an airbag fabric which is folded into a vehicle leads to drastic deterioration of the packing property. Further, the carboxyl end group (hereinafter, referred to as "CEG") in the polyester molecular chain attacks the ester bond under severe conditions of high temperature and high humidity to break the molecular chain apart, deteriorating the properties with the progress of aging.

Accordingly, the present invention can improve the properties as an airbag fabric by using a low-fineness polyester fiber having high strength and high elongation and thereby optimizing the range of properties, such as tensile strength and tear strength, of the fabric, to remarkably lower the stiffness and maintain good mechanical properties and air sealing performance.

From the results of a series of experiments, the inventors of the present invention have found it out that the use of a polyester fabric having defined characteristics as an airbag fabric can enhance folding property, dimensional stability, and air sealing effect and thereby maintain good packing property when packed into a vehicle, good mechanical properties, high performance of air leak prevention, and high packaging performance under severe conditions of high temperature and high humidity.

In accordance with one embodiment of the present invention, there is provided a polyester fabric having defined characteristics. Such a polyester fabric has a tensile strength $T_1$ of at least 37 kN/m (95 kgf/inch) as measured according to the ASTM D 5034 method, and a tear strength $T_2$ of at least 64 N (6.5 kgf) as measured according to the ASTM D 2261 TONGUE method, where the ratio $T_1/T_2$ of the tensile strength $T_1$ to the tear strength $T_2$ is defined by the following calculation formula 1:

[Calculation Formula 1]

$$4.0 \leq T_1/T_2 \leq 16.5$$

In the formula, $T_1$ is the warp tensile strength (kgf/inch) of the polyester fabric; and $T_2$ is the warp tear strength (kgf) of the polyester fabric.

From the results of a series of experiments, the inventors of the present invention have also found it out that a low-modular polyester fiber with high strength and high elongation relative to the conventional polyester fiber can be used to prepare an airbag fabric which is optimized in tensile strength and tear strength and thereby capable of effectively absorbing and enduring the energy of the high temperature high pressure gas. For the polyester fabric for airbag, the tensile strength $T_1$ g as measured according to the ASTM D 5034 method is 37 kN/m (95 kgf/inch) or greater, or 37 to 98 kN/m (95 to 230 kgf/inch), preferably 39 kN/m (100 kgf/inch) or greater, or 39 to 87 kN/m (100 to 225 kgf/inch); and the tear strength $T_2$ is 64 to 216 N (6.5 to 22 kgf), preferably 69 to 186 N (7.0 to 19 kgf), when measured according to the ASTM D 2261 TONGUE method for an uncoated fabric, and 196 to 441 N (20 to 45 kgf). preferably 216 to 392 N (22 to 40 kgf), when measured according to the ASTM D 2261 TONGUE method for a coated fabric.

As can be seen from the calculation formula 1, the ratio $T_1/T_2$ of the tensile strength $T_1$ to the tear strength $T_2$ is 4.0 to 16.5, preferably 4.30 to 15.0. More specifically, the ratio $T_1/T_2$ of the tensile strength $T_1$ to the tear strength $T_2$ is 9.5 to 16.5, preferably 10.0 to 15.0, when measured for an uncoated fabric; and 4.0 to 9.5, preferably 4.30 to 9.0, when measured for a coated fabric. The optimization of tensile strength and tear strength allows the airbag fabric to be enhanced in toughness and energy absorption performance and overcome the problems with the conventional PET fabric in association with high stiffness, so the airbag fabric can exhibit excellences in folding property, flexibility and packing property.

For effective absorption of impact energy instantaneously generated upon the airbag deploying, the present invention controls both the tensile strength and the tear strength of the fabric in an optimum range and thereby enhances the mechanical properties and folding property of the final woven fabric. The optimization of the tensile strength and the tear strength is necessary in order for the fabric to safely absorb the impact energy of the gas instantaneously ejected upon explosion of chemicals in the airbag at the early stage, get unfolded with ease and secure good folding property. In this regard, the fabric of the present invention is required to have the tensile strength and the tear strength within the above-defined ranges.

Particularly, the present invention maintains the tensile strength of the polyester fabric denoted by $T_1$ in the calculation formula 1, that is, warp tensile strength being 37 kN/m (95 kgf/inch) or above, and the tear strength of the polyester fabric denoted by $T_2$, that is, warp tear strength being 64 N (6.5 kgf) or above, so the polyester fabric can secure both high toughness and high energy absorption performance when the airbag is unfolding. Upon failure to maintain the tensile strength and the tear strength above the lower limit of the defined ranges, the fabric is susceptible to rupture in the event of airbag unfolding and thus fails to protect occupants effectively from injuries.

The ratio $T_1/T_2$ of the tensile strength to the tear strength is 4.0 or greater with a view to the airbag fabric absorbing the pressure of the inflator under high-temperature and high-pressure conditions to protect occupants; and 16.5 or less in the consideration of the packing property of the airbag cushion assembly. The ratio $T_1/T_2$ of the tensile

strength to the tear strength out of the defined range leads to extremely low tensile strength and extremely high tear strength, or extremely high tensile strength and extremely low tear strength. More specifically, the ratio $T_1/T_2$ of the tensile strength to the tear strength less than 4.0 results in extremely low tensile strength and extremely high tear strength, lowering the fabric density and deteriorating air sealing performance and edge comb resistance, so the fabric cannot absorb the energy from the high temperature high pressure gas ejected in the event of airbag unfolding. On the other hand, the ratio $T_1/T_2$ of the tensile strength to the tear strength greater than 16.5 imparts extremely high tensile strength and extremely low tear strength, increasing fabric density, air sealing performance, and edge comb resistance, but making the fabric extremely stiff and heavy with deteriorated packing and folding properties when the airbag is packed into a vehicle, so the fabric is not suitable for use in airbag cushions.

Further, the polyester fabric comprises a low-fineness polyester fiber having a fineness of 22.2 to 43.9 tex (200 to 395 denier), preferably 23.3 to 43.9 tex (210 to 395 denier), more preferably 25.6 to 43.3 tex (230 to 390 denier). In this regard, the polyester fabric comprises a polyester fiber having a fineness of 22.2 tex (200 denier) or greater with a view to maintaining good mechanical properties to achieve good absorption performance to absorb an unfolding energy at high temperature and high pressure in the event of airbag unfolding. To be suitable for use in an airbag fabric more effectively, the polyester fabric comprises a fiber having a fineness of 43.9 tex (395 denier) or less with a view to enhancing the folding property of the cushion and improving the weight of the cushion.

In accordance with one embodiment of the present invention, the polyester fabric has an warp edge comb resistance $E_1$ of at least 200 N and a weft edge comb resistance $E_2$ of at least 200 N as measured at the room temperature according to the ASTM D 6479 method, where the sum of the warp edge comb resistance $E_1$ and the weft edge comb resistance $E_2$ is defined by the following calculation formula 2:

$$[\text{Calculation Formula 2}]$$

$$400 \leq E_1 + E_2 \leq 900$$

In the calculation formula, $E_1$ is the warp edge comb resistance (N) of the polyester fabric; and $E_2$ is the weft edge comb resistance (N) of the polyester fabric.

The polyester fabric of the present invention can be optimized in edge comb resistances $E_1$ and $E_2$ in the warp and weft directions within a defined range, to improve the final fabric product in mechanical properties, energy absorption performance under conditions of high temperature and high pressure, folding property, and so forth. More specifically, the polyester fabric may have a warp edge comb resistance $E_1$ (at the room temperature) of 200 N or greater, or 200 to 450 N, preferably 250 N or greater, or 250 to 400 N; and a weft edge comb resistance $E_2$ (at the room temperature) of 200 N or greater, or 200 to 450 N, preferably 250 N or greater, or 250 to 400 N. As can be seen from the calculation formula 2, the sum of the warp edge comb resistance and the weft edge comb resistance is in the range of 400 to 900 N, preferably 500 to 800 N. In this regard, the warp or weft edge comb resistance of less than 200 N undesirably results in abrupt deterioration of the strength along the seam line of the airbag cushion in the event of airbag unfolding, so the fabric is susceptible to rupture due to occurrence of pin holes and seam puckering during the airbag unfolding. Moreover, the sum of the warp edge comb resistance $E_1$ and the weft edge comb resistance $E_2$ can be preferably maintained in the defined range to minimize the seam puckering along the seam line and sufficiently reduce the internal pressure of the airbag when the airbag restraints occupants during inflation.

Furthermore, it is of great importance that the polyester fabric can endure the tensile force of the high-pressure air to minimize elongation in consideration of packaging performance and also to maximize the energy absorption performance of absorbing the energy of the high temperature high pressure exhaust gas in view of securing good mechanical properties upon the airbag deploying. Accordingly, the fabric is woven to have a cover factor optimized in the range of 1,800 to 2,300, preferably 1,820 to 2,250, as given by the following calculation formula 3, thereby enhancing packaging performance and energy absorption performance in the event of airbag unfolding.

$$[\text{Calculation Formula 3}]$$

$$\text{Cover factor (CF)}$$

$$= \text{warp density (thread/inch)} \times \sqrt{warp\ denier} + \text{weft density (thread/inch)} \times \sqrt{weft\ denier}$$

The cover factor of the fabric being less than 1,800 leads to air leakage during air inflation; while the cover factor greater than 2,300 deteriorates the packing and folding properties of the airbag cushion when the airbag is installed into a vehicle.

The polyester fabric for airbag according to the present invention has a toughness of 1.5 kJ/m³ or greater, or 1.5 to 3.5 kJ/m³, preferably 1.8 kJ/m³ or greater, or 1.8 to 3.2 kJ/m³, where the toughness is defined by the following calculation formula 4:

[Calculation Formula 4]

$$\text{Toughness (work of rupture)} = \int_{0}^{strain} F \cdot dl$$

In the calculation formula 4, F denotes the load applied when the length of the polyester fabric is increased by *dl;* and *dl* is the increment of the length of the polyester fabric.

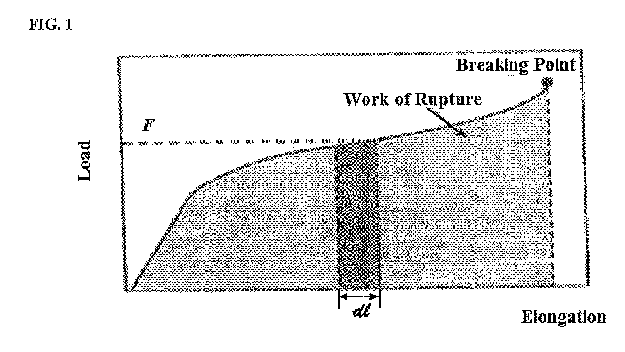

Compared with the conventional fabric, the polyester fabric has a higher level of toughness (work of rupture) and thus more effectively absorbs the energy of high temperature high pressure gas. The term "toughness" as used herein is defined as the amount of energy that the fabric can absorb before rupturing under the tensile force, and also defined as the resistance to an instantaneous impact. When the length of a fiber is increased from 1 to 1+dl under load F, the work is F·dl, and the toughness required to break the fiber is given by the calculation formula 4. In other words, the toughness is given by the area underneath the strength-elongation curve of the fiber and the fabric (See. FIG. 1). The fabric exhibits higher toughness with an increase in the strength and elongation of the fiber used to form the fabric. Particularly, the airbag fabric with low toughness is susceptible to rupture, because the low toughness results in low resistance to the instantaneous unfolding impact from the inflator under high temperature high pressure conditions in the event of airbag unfolding. Accordingly, the fabric of the present invention of which the toughness is, for example, below 1.5 kJ/m³ is unsuitable for use as an airbag fabric.

Generally, a polyester fiber has such a molecular structure to impart higher stiffness than nylon fibers or the like, consequently with higher Young's modulus, so the use of the polyester fiber for an airbag fabric may lead to deterioration of folding and packing properties and make the airbag fabric difficult to put into a small space of a vehicle. Accordingly, the present invention uses a polyester fiber with high strength and low Young's modulus to maintain the toughness and tear strength of the fabric and greatly reduce the stiffness of the fabric. The airbag fabric of the present invention has a stiffness of 12 N (1.2 kgf) or less or 3 to 12 N (0.3 to 1.2 kgf), preferably 10 N (1.0 kgf) or less or 3 to 10 N (0.3 to 1.0 kgf), more preferably 9 N (0.9 kgf) or less or 3 to 9 N (0.3 to 0.9 kgf), where the stiffness is measured according to the ASTM D 4032 method. The airbag fabric of the present invention, which has a remarkably low stiffness relative to the conventional polyester fabric, can acquire good folding property, high flexibility, and enhanced packing property when the airbag is installed into a vehicle.

To be used for airbags, the fabric of the present invention preferably has a stiffness maintained in the defined range. An extremely low stiffness of the fabric cannot secure supportive and protective functions when the airbag is inflated to unfold; while an extremely high stiffness of the fabric may reduce dimensional stability and thus deteriorate packing property when the airbag is installed into the vehicle. Further, the stiffness of the fabric is desirably 12 N (1.2 kgf) or less in view of preventing deterioration of the packing property due to difficulty of folding the extremely stiff fabric, and avoiding discoloration of the fabric.

By using a low-fineness fiber among the low-modulus polyester fibers having high strength and high elongation, the airbag fabric can not only maintain the mechanical properties and the dimensional stability within enhanced ranges but also reduce the fabric thickness considerably. For the airbag fabric of the present invention, the thickness as measured according to the ASTM D 1777 method for an uncoated fabric is 290 mm or less, or 50 to 290 mm, preferably 287 mm or less, or 55 to 287 mm, more preferably 285 mm or less, or 60 to 285 mm. The airbag fabric of the present invention can secure a low level of thickness, which leads to good folding property, high flexibility, and enhanced packing property when the airbag is installed into a vehicle.

For the airbag fabric of the present invention, the static air permeability as measured according to the ASTM D 737 method for an uncoated fabric is 2.5 m³/h (1.5 cfm) or less, or 0.0 to 2.5 m³/h (0.0 to 1.5 cfm), preferably 2.0 m³/h (1.2 cfm) or less, or 0.25 to 2.0 m³/h (0.15 to 1.2 cfm), more preferably 1.7 m³/h (1.0 cfm or less), or 0.25 to 1.7 m³/h (0.15 to 1.0 cfm) when ΔP is 125 pa; and 17 m³/h (10 cfm) or less, or 3.4 to 14 m³/h (2 to 8 cfm), preferably 14 m³/h (8 cfm) or less, or 2.5 to 14 m³/h (1.5 to 8 cfm) when ΔP is 500 pa. The term "static air permeability" as used herein refers to the quantity of air penetrating into the airbag fabric under a predetermined pressure. The static air permeability becomes lower as the fabric has lower filament fineness (denier per filament) and higher fabric density.

By including a rubber coating layer, the airbag fabric can have a considerably reduced air permeability, almost approximating to 0 cfm. With the rubber coating layer, the coated airbag fabric according to the present invention has a static air permeability (as measured according to the ASTM D 373) of 0.17 m³/h (0.1 cfm) or less, or 0 to 0.17 m³/h (0 to 0.1 cfm), preferably 0.08 m³/h (0.05 cfm) or less, or 0 to 0.08 m³/h (0 to 0.05 cfm), when ΔP is 125 pa; and 0.5 m³/h (0.3 cfm) or less, or to 0.5 m³/h (0 to 0.3 cfm), preferably 0.17 m³/h (0.1 cfm) or less, or 0 to 0.17 m³/h (0 to 0.1 cfm), when ΔP is 500 pa.

When the static air permeability of the airbag fabric, either uncoated or coated, is above the upper limit of the defined range, the airbag fabric of the present invention is undesirable in view of maintaining the packaging performance.

The airbag fabric may have a breaking elongation as measured at the room temperature according to the ASTM D 5034 method in the range of 23 to 50 %, preferably about 25 to 45 %. Preferably, the breaking elongation is 23 % or greater in consideration of properties required for the conventional airbags and 50 % or less in view of actually achieving the properties.

Further, the shrinkage of the fabric in the warp or weft direction as measured according to the ASTM D 1776 method is 1.0 % or less, preferably 0.8 % or less. Most preferably, the shrinkage in the warp or weft direction is not greater than 1.0 % in consideration of the dimensional stability.

Preferably, the present invention can maintain the enhanced properties throughout an aging process carried out in different ways with a view to securing good performance as an airbag fabric. The aging process may include at least one selected from the group consisting of heat aging, cycle aging, and humidity aging. It is preferable for the airbag fabric to maintain high levels of strengths or other properties throughout all the three aging processes.

In this regard, the heat aging involves conducting a heat treatment on the fabric at high temperature, preferably in the range of 110 to 130 °C (degree celsius) for 300 hours or more, or 300 to 500 hours. The cycle aging includes conducting heat aging, humidity aging and cold aging in cycles. Preferably, the cycle aging involves repeatedly conducting 2 to 5 cycles of a first aging at 30 to 45 °C and 93 to 97 % in relative humidity (RH) for 12 to 48 hours, a second aging at 70 to 120 °C for 12 to 48 hours, and a third aging at -10 to -45 °C for 12 to 48 hours. The humidity aging includes conducting an aging under conditions of high temperature and high humidity, preferably at 60 to 90 °C and 93 to 97 % RH for 300 hours or more, or 300 to 500 hours.

Particularly, the airbag fabric of the present invention has strength retention of at least 80 %, preferably at least 85 %, more preferably at least 90 %, where the strength retention of the fabric is determined by calculating the percentage (%) of the strength after aging under the defined conditions with respect to the strength measured at the room temperature. Like this, the present invention can maintain high levels of strength and strength retention throughout a longterm aging under severe conditions of high temperature and high humidity, resulting in high performance as an airbag fabric.

As stated above, the polyester fabric of the present invention comprises a polyester fiber having defined characteristics, and more particularly polyester fiber with a fineness of 22.2 to 43.9 tex (200 to 395 denier) with a view to maintaining low fineness and high strength.

Rather than using the conventional high-modulus polyester fiber with high strength and low elongation, the present invention uses a low-modulus polyester fiber having high strength and high elongation to provide a polyester fabric for airbag, which is superior in dimensional stability, air sealing performance, and folding property, as well as in energy absorption performance during inflation of the airbag.

The polyester fabric may use a polyester fiber prepared from polyester chips having an intrinsic viscosity of 1.05 to 2.0 dl/g, preferably 1.10 to 1.90 dl/g. To maintain good properties throughout the aging process at the room temperature and under severe conditions of high temperature and high humidity, the polyester fiber is prepared from polyester chips having an intrinsic viscosity of 1.05 dl/g or above. For acquiring low shrinkage, it is desirable that the polyester fabric comprises a polyester fiber prepared from polyester chips having an intrinsic viscosity of 2.0 dl/g or below, preferably 1.90 dl/g or below.

Preferably, the polyester fiber has a shrinkage stress of 0.044 to 0.66 cN/tex (0.005 to 0.075 g/d) at 150 °C which corresponds to the laminate coating temperature of general coated fabrics; and 0.044 to 0.66 cN/tex (0.005 to 0.075 g/d) at 200 °C which corresponds to the sol coating temperature of general coated fabrics. In other words, the shrinkage stress of 0.044 cN/tex (0.005 g/d) or greater at 150 °C or 200 °C prevents the fabric sagging under the heat during the coating process, and the shrinkage stress of 0.66 cN/tex (0.075 g/d) or less reduces the relaxation stress in the process of cooling down to the room temperature subsequent to the coating process.

At least a predetermined level of tension is imposed on the polyester fiber during the heat treatment of the coating process to maintain the woven shape of the fiber, so the shrinkage at 177 °C is preferably 6.5 % or below with a view to preventing deformation of the airbag fabric.

The shrinkage stress as defined herein is based on the measurement value under a fixed load of 0.88 cN/tex (0.10 g/d), and the shrinkage is based on the measurement under a fixed load of 0.01 g/d.

The polyester fiber is preferably a polyethylene terephthalate (PET) fiber, more preferably a PET fiber comprising at least 90 mol.% of PET.

Further, the polymer fiber has a filament fineness of 0.29 to 0.61 tex (2.6 to 5.5 DPF (Denier Per Filament)), preferably 0.31 to 0.49 tex (2.8 to 4.4 DPF). For effective use in airbag fabrics, the fiber preferably has a fineness maintained in a defined range to impart low fineness and high strength. The higher filament count results in the softer polyester fiber, but an extremely high filament count leads to low spinnability. Therefore, the filament count is 60 to 144, preferably 65 to 125, more preferably 72 to 105.

Further, the polyester fiber has a Young's modulus $M^1$ at 1% elongation in the range of 6.6 to 8.4 N/tex (75 to 95 g/de), preferably 7.0 to 89.1 N/tex (80 to 92 g/de); and a Young's modulus $M^2$ at 2% elongation in the range of 2.2 to 4.8 N/tex (25 to 55 g/de), preferably 2.4 to 4.4 N/tex (27 to 50 g/de), where the Young's modulus is measured according to the ASTM D 885 method. For the conventional polyester fiber for industrial use, Young's modulus at 1% elongation is at least 9.7 N/tex (110 g/de), and Young's modulus at 2% elongation is at least 7.0 N/tex (80 g/de). In comparison with the case of using the industrial fiber in the prior art, the present invention uses a polyester fiber having far lower Young's modulus to prepare the airbag fabric.

The Young's modulus of the polyester fiber is the modulus of elasticity defined as the slope in the elastic portion of the stress-strain curve obtained in the tensile testing and corresponds to the elastic modulus describing how much an object is elongated and deformed as the object is stretched at both ends. The fiber with high Young's modulus has good elasticity, but results in deteriorated stiffness of the fabric; while the fiber with extremely low Young's modulus has good stiffness, but with low elastic recovery, deteriorating the toughness of the fabric. In this regard, the airbag fabric prepared from the polyester fiber having a relatively low initial Young's modulus overcomes the problems with the conventional polyester fabric in association with high stiffness and secures excellences in folding and packing properties and flexibility.

The toughness of the polyester fiber can be determined using the polyester fiber rather than the polyester fabric according to the calculation formula 4. The measurement of toughness is 65 kJ/m$^3$ or greater, or 65 to 90 J/m$^3$, preferably 70 kJ/m$^3$ or greater, or 70 to 88 J/m$^3$. In particular, the present invention uses a specific polyester fiber having a high level of toughness (work of rupture) relative to the conventional polyester fiber, to provide an airbag fabric capable of effectively absorbing and enduring the energy of high temperature high pressure gas.

The polyester fiber has a tensile strength of 76 cN/tex (8.6 g/d) or greater, preferably 76 to 84 cN/tex (8.6 to 9.6 g/d), more preferably 77 to 82 cN/tex (8.8 to 9.3 g/d); a breaking elongation of 14 % or greater, or 14 to 23 %, preferably 16.5 % or greater, or 16.5 to 21 %; and a dry shrinkage of 1.0 % or greater, or 1.0 to 6.5 %, preferably 1.5 % or greater, or 1.5 to 5.7 %.

As described above, the polyester fabric of the present invention is prepared using a low-fineness polyester fiber having intrinsic viscosity, initial Young's modulus, and elongation in optimized ranges, to impart good performance for the airbag fabric.

The polyester fiber can be prepared by melt-spinning a PET polymer into an undrawn fiber and then drawing the undrawn fiber. The specific conditions or procedures of the individual steps affect the properties of the polyester fiber directly or indirectly and thus contribute to the production of polyester fiber suitable for use in the airbag fabric of the present invention.

In accordance with a more preferred embodiment of the present invention, the low-modulus polyester fiber with high strength and high elongation can be prepared by a method that comprises: melt-spinning a high-viscosity polymer comprising at least 70 mol% of polyethylene terephthalate and having an intrinsic viscosity of at least 1.05 dl/g at a low temperature of 200 to 300 °C to form a undrawn polyester fiber; and drawing the undrawn polyester fiber at a draw ratio of 5.0 to 6.0. In this method, a high-viscosity PET polymer having a low CEG (carboxyl end group) content, preferably 30 meq/kg or less, is subjected to melt spinning at low temperature, more preferably at low temperature and low spinning rate, where the melt-spinning process suppresses a decrease of intrinsic viscosity and an increase of CEG content of the fiber to the maximum extent, maintaining good mechanical properties of the fiber and securing high elongation. Moreover, the subsequent drawing process which involves drawing at an optimized draw ratio of 5.0 to 6.0 can suppress a decrease of elongation to the maximum extent and thereby produce a low-modulus polyester fiber with high strength and high elongation, which can be effectively used in the manufacture of airbag fabrics.

In this regard, the higher temperature, for example, above 300 °C in the melt spinning process leads to thermal degradation of the PET polymer in great extent, intensifying a decrease of intrinsic viscosity and an increase of CEG content, increases molecular orientation to accelerate a decrease of elongation and an increase of Young's modulus, and causes damage to the surface of the fiber to deteriorate the whole properties of the fiber. An extremely higher draw ratio, for example, greater than 6.0 in the drawing process results in excessive drawing, consequently with breaking or irregularity of the drawn fiber, so the resultant polyester fiber cannot have properties desirable for use in airbag fabric. Further, a relatively low draw ratio in the drawing process leads to a low degree of orientation of the fiber and thus partially drops the strength of the resultant polyester fiber. Therefore, the draw ratio in the drawing process is preferably at least 5.0 to produce a low-modular polyester fiber with high strength and high elongation that is suitable for use in airbag fabrics.

The subsequent processes can be performed under the conditions optimized with a view to producing a low-modulus polyester fiber with high strength and high elongation at a high draw ratio. For example, the relaxation can be controlled in an appropriate range, preferably 11 to 14 %.

Such a process optimization leads to production of a polyester fiber for airbag having low initial Young's modulus, high strength, and high elongation. The optimization of melt spinning and drawing processes contributes to minimization of the CEG (Carboxyl End Group) content, where the CEG acts as an acid under high humidity to break the molecular chain of the polyester fiber. The resultant polyester fiber has low initial Young's modulus and high elongation and thus can be preferably used for airbag fabrics superior in mechanical properties, packing property, dimensional stability, impact resistance, and air sealing effect.

In accordance with another embodiment of the present invention, the airbag fabric of the present invention may further comprise a rubber coating layer applied on the surface by coating or lamination. The rubber component as used herein includes at least one selected from the group consisting of powdered silicone rubber, liquid silicone rubber, polyurethane, chloroprene, neoprene rubber, and emulsion type silicone resin. The type of the rubber component for the coating layer is not specifically limited to those substances listed above, but the silicone coating is preferable in consideration of eco-friendliness and mechanical properties.

The coating weight per unit area of the rubber component coating layer is 20 to 200 $g/m^2$, preferably 20 to 100 $g/m^2$. More specifically, the coating weight is preferably 30 to 95 $g/m^2$ for OPW (One Piece Woven) type side curtains or airbag fabrics, and 20 to 50 $g/m^2$ for plain woven airbag fabrics.

In accordance with a further another embodiment of the present invention, there is provided a method for preparing an airbag fabric using a polyester fiber as defined in claim 11. The method for preparing a polyester fabric for airbag comprises: weaving a polyester fiber having a fineness of 22.2 to 43.9 tex (200 to 395 denier) into a grey fabric for airbag; scouring the grey fabric for airbag; and tentering the scoured fabric.

In the present invention, the polyester fiber can be processed into the final airbag fabric by known methods of weaving, scouring, and tentering. The weaving type of the fabric is not specifically limited but preferably includes plain weaving or OPW type weaving.

Particularly, the airbag fabric of the present invention can be prepared from the polyester fiber used as warp and weft threads by beaming, weaving, scouring, and tentering. The fabric can be woven with a known weaving machine, which is not specifically limited but includes a rapier loom, an air jet loom, or a water jet loom for the plain woven fabrics, and a Jacquard loom for the OPW fabrics.

In comparison with the prior art, the present invention involves a heat treatment process at higher temperature by using a polyester fiber with higher strength, higher elongation, and lower shrinkage. In other words, the woven grey fabric is scoured and tentered, and the tentered fabric is coated with a rubber component, dried and then solidified at a vulcanization temperature of 140 to 210 °C, preferably 160 to 200 °C, most preferably 175 to 195 °C. The vulcanization temperature can be 140 °C or above in consideration of the mechanical properties of the fabric, such as tear strength, and 210 °C or below considering stiffness. Particularly, the heat treatment can be carried out on a multi-step basis in the order of, for example, a first heat treatment at 150 to 170 °C, a second heat treatment at 170 to 190 °C, and a third heat treatment at 190 to 210 °C.

Then polyester fabric of the present invention when prepared by heat treatment at high temperature can be enhanced in weave density pertaining to the low-shrinkage characteristic of the polyester fiber, resulting in high dimensional stability and good air sealing effect, enhanced stiffness, and improved tear strength.

Further, the solidification process may be carried out at the above-defined vulcanization temperature for 30 to 120 seconds, preferably 35 to 100 seconds, most preferably 40 to 90 seconds. The solidification time less than 30 seconds results in a failure to solidify the rubber coating layer and thus deterioration in the mechanical properties of the fabric, causing defoliation of the coating layer. The solidification time longer than 120 seconds leads to an increase in the stiffness and thickness of the final fabric product, consequently with deterioration of the folding property.

For the airbag fabric of the present invention, either one side or both sides of the woven fabric can be coated with the above-mentioned rubber component. The rubber coating layer can be applied by any known coating method, which includes, but is not specifically limited to, knife over-roll coating, doctor blade coating, or spray coating.

The coated airbag fabric may be processed into an airbag cushion in a defined shape through cutting and sewing processes. The airbag cushion is not specifically limited in shape and may be formed in any normal shape.

In accordance with a still another embodiment of the present invention, there are provided an airbag for vehicle comprising the polyester fabric, and an airbag system comprising the airbag, where the airbag system may be equipped with devices well-known to those skilled in the art.

The airbags are classified into frontal airbags and side curtain airbags. The frontal airbags include driver side airbags, passenger side airbags, side protection airbags, knee airbags, ankle airbags, pedestrian airbags, and so forth. The side curtain airbags deploy to protect occupants in the event of the vehicle's side impact collision or rollover. Accordingly, the airbag of the present invention includes both frontal airbags and side curtain airbags.

The present invention does not preclude addition or omission of the elements or components other than those stated herein under necessity, which are not specifically limited.

The present invention provides a polyester fabric for airbag excellent in energy absorption performance during airbag unfolding, and an airbag for vehicle prepared using the polyester fabric for airbag.

The airbag fabric uses a low-modulus polyester fiber having high strength, high elongation, and low fineness, to minimize thermal shrinkage throughout heat treatment at high temperature, provide excellences in dimensional stability, mechanical properties, and air sealing performance, and secure good folding property and flexibility, thereby remarkably improving packing property of the airbag when the airbag is installed into a vehicle and also minimizing collision impacts on the occupants to protect the occupants with safety.

Accordingly, the polyester fabric of the present invention is preferably applicable to the manufacture of airbags for vehicle.

## BRIEF DESCRIPTION OF THE DRAWINGS

FIG. 1 shows an example of the strength-elongation curve of a normal fiber, where the area underneath the strength-elongation curve is defined as toughness (work of rupture, $J/m^3$).
FIG. 2 shows the strength-elongation curve of the polyester fabric according to Example 5 in the present invention.
FIG. 3 shows the strength-elongation curve of the polyester fabric according to Comparative Example 5 in the present invention.

## DETAILED DESCRIPTION OF THE INVENTION

Hereinafter, the present invention will be described in detail with reference to the preferred examples, which are given only to exemplify the present invention and not intended to limit the scope of the present invention.

### Examples 1 to 5

PET chips with a defined intrinsic viscosity were processed into a polyester fiber through a melt spinning machine in one step. The polyester fiber was woven into a grey fabric for airbag through a rapier loom and subjected to scouring and tentering to prepare an airbag fabric. The airbag fabric thus obtained was coated with a liquid silicone rubber (LSR) resin by knife over-roll coating to prepare a silicon-coated fabric.

In the regard, Table 1 shows the intrinsic viscosity, CEG content, melt-spinning temperature, and draw ratio of PET chips, the properties of the fiber, such as intrinsic viscosity, toughness, Young's modulus at 1% elongation, Young's modulus at 2% elongation, tensile strength, etc., the warp and weft weave densities, weaving type, heat treatment temperature, rubber component, and coating weight for the fabric. The other conditions are as known in the prior art in association with the preparation of a polyester fabric for airbag.

[Table 1]

| Div. | Examples | | | | |
|---|---|---|---|---|---|
| | 1 | 2 | 3 | 4 | 5 |
| PET content (mol%) | 100 | 100 | 100 | 100 | 100 |
| Intrinsic viscosity (dl/g) of PET chip | 1.26 | 1.37 | 1.46 | 1.59 | 1.82 |
| CEG content (meq/kg) of PET chip | 30 | 27 | 24 | 23 | 22 |
| Spinning temperature (°C) | 293 | 295 | 295 | 295 | 295 |
| Draw ratio | 5.80 | 5.90 | 6.00 | 6.05 | 6.10 |
| Intrinsic viscosity (dl/g) of fiber | 0.93 | 0.97 | 1.05 | 1.11 | 1.20 |
| Toughness ($J/m^3$) of fiber | 70 | 75 | 81 | 83 | 85 |
| Young's modulus (g/de) at 1% elongation* | 88 | 89.5 | 76 | 75 | 85 |
| Young's modulus (g/de) at 2% elongation* | 47.5 | 48.6 | 29.0 | 29.3 | 28.2 |
| Tensile strength (g/de) of fiber* | 8.8 | 8.85 | 8.95 | 9.10 | 9.20 |

(continued)

| Div. | Examples | | | | |
|---|---|---|---|---|---|
| | 1 | 2 | 3 | 4 | 5 |
| Breaking elongation (%) of fiber | 16.5 | 16.8 | 17.5 | 17.5 | 18.1 |
| Dry shrinkage (%) | 5.0 | 5.3 | 2.8 | 4.0 | 5.3 |
| Filament fineness (DPF)** | 3.38 | 3.19 | 2.40 | 4.06 | 3.25 |
| Total fineness (de)*** | 230 | 230 | 230 | 390 | 390 |
| Filament count | 68 | 72 | 96 | 96 | 120 |
| Weave density (warp $\times$ weft) | 72x72 | 72x72 | 72x72 | 52x52 | 52x52 |
| Weaving type | Plain weaving | Plain weaving | Plain weaving | Plain weaving | Plain weaving |
| Heat treatment/vulcanization Temperature (°C) | 185 | 185 | 185 | 185 | 185 |
| Rubber component | Liquid silicone | Liquid silicone | Liquid silicone | Liquid silicone | Liquid silicone |
| Rubber coating weight (g/m$^2$) | 25 | 25 | 25 | 25 | 25 |
| *1 g/de = 8.8 cN/tex <br> **1 DPF (denier per filament) = 0.11 tex per filament <br> *** 1 de = 0.11 tex | | | | | |

The polyester fabrics prepared in Examples 1 to 5 were measured in regard to properties according to the following methods. The measurement results are presented in Table 2.

(a) Tensile strength and breaking elongation

The uncoated fabric before the coating process was cut into a test specimen, which was gripped in the lower stationary clamp of a tensile testing machine according to the ASTM D 5034 method, while the upper clamp was moved upward, to measure the tensile strength $T_1$ and the breaking elongation when the airbag fabric specimen was ruptured.

(b) Tear strength

A test specimen in dimension of 75mm $\times$ 200 mm was cut out of the uncoated fabric before the coating process. The upper and lower ends of the specimen were gripped between left and right spaces of the upper and lower jaw faces, respectively, in a testing machine according to the ASTM D 2261 TONGUE procedure. Based on the distance between the jaw faces, the jaw faces moved apart at a tearing rate of 300 mm/min with the gap between the jaw faces increasing at 76 mm/min to measure the tear strength $T_2$ for the uncoated fabric.

(c) Edge comb resistance

The uncoated fabric before the coating process was measured in regard to the edge comb resistances $E_1$ and $E_2$ (in the warp and weft directions, respectively) at the room temperature (25 °C) according to the ASTM D 6479 method.

(c) Cover factor

The cover factor (CF) of the uncoated fabric was determined according to the following calculation formula 3:

[Calculation Formula 3]

Cover factor (CF)

$$= \text{warp density (thread/inch)} \times \sqrt{warp\ denier} + \text{weft density (thread/inch)} \times \sqrt{weft\ denier}$$

(d) Toughness

The toughness ($J/m^3$) of the fabric was determined according to the following calculation formula 4:

[Calculation Formula 4]

$$\text{Toughness (work of rupture)} = \int_0^{strain} F \cdot dl$$

In the calculation formula 4, F denotes the load applied when the length of the polyester fabric is increased by *dl*; and *dl* is the increment of the length of the polyester fabric.

The toughness was measured for the "uncoated" fabric before the coating process.

(f) Warp and weft shrinkages

The fabric was measured in regard to warp and weft shrinkages according to the ASTM D 1776 method. In the procedure, the uncoated fabric before the coating process was cut into a test specimen. Lines marking a 20 cm of length in the warp and weft directions were made in the specimen fabric before shrinkage. After one-hour heat treatment in a chamber at 149 °C, the lengths of the mark lines of the shrunk specimen fabric were measured to determine the warp and weft shrinkages as follows:

$$\frac{(length\ before\ shrinkage) - (length\ after\ shrinkage)}{(length\ before\ shrinkage)} \times 100\ \%$$

(g) Stiffness

The uncoated fabric before the coating process was evaluated in regard to stiffness according to the ASTM D 4032 procedure (circular bend test method) using a stiffness testing machine. The stiffness testing adopted the cantilever method, where the stiffing testing machine used a test stand declined at a predetermined angle for bending the fabric to measure the length of the fabric after bending.

(h) Thickness

The thickness of the uncoated fabric before the coating process was evaluated according to the ASTM D 1777 method.

(i) Air permeability

According to the ASTM D 737 method, the uncoated fabric before the coating process was kept under conditions of 20 °C and 65 % RH for one hour or longer. The static air permeability was determined as the volume of air passing through the circular cross-section $38cm^2$ in size, where the air pressure $\Delta P$ was 125 pa or 500 pa.

[Table 2]

| Div. | Examples | | | | |
|---|---|---|---|---|---|
| | 1 | 2 | 3 | 4 | 5 |
| Warp tensile strength $T_1$ (kgf/inch)* | 103 | 105 | 108 | 222 | 225 |

(continued)

| Div. | | Examples | | | | |
|---|---|---|---|---|---|---|
| | | 1 | 2 | 3 | 4 | 5 |
| Warp tear strength $T_2$ (kgf) / uncoated** | | 6.9 | 7.1 | 7.3 | 19 | 20 |
| Warp tear strength $T_2$ (kgf) / coated** | | 22 | 22 | 23 | 32 | 33 |
| $T_1/T_2$ (uncoated) | | 14.9 | 14.8 | 14.8 | 11.7 | 11.3 |
| $T_1/T_2$ (coated) | | 4.7 | 4.8 | 4.7 | 6.9 | 6.8 |
| Warp edge comb resistance $E_1$ (N) | | 265 | 268 | 270 | 330 | 340 |
| Weft edge comb resistance $E_2$ (N) | | 278 | 280 | 283 | 335 | 337 |
| $E_1 + E_2$ | | 543 | 548 | 553 | 665 | 677 |
| Cover factor of fabric | | 2183 | 2183 | 2183 | 2053 | 2053 |
| Toughness ($kJ/m^3$) of fabric | | 1.83 | 1.84 | 1.85 | 3.25 | 3.40 |
| Breaking elongation (%) of fabric | | 25 | 25 | 27 | 30 | 37 |
| Shrinkage (%) of fabric | | 0.5 | 0.5 | 0.4 | 0.4 | 0.5 |
| Stiffness (kgf)** | Warp | 0.65 | 0.66 | 0.53 | 0.85 | 0.78 |
| | Weft | 0.69 | 0.70 | 0.56 | 0.88 | 0.81 |
| Thickness (mm) | | 210 | 210 | 211 | 280 | 283 |
| Static air permeability (cfm)*** | $\Delta P$ = 125 pa | 0.3 | 0.3 | 0.3 | 1.4 | 1.4 |
| | $\Delta P$ = 500 pa | 7.5 | 7.5 | 7.3 | 9.5 | 9.4 |
| * 1 kgf/inch = 3.86 N/cm<br>** 1 kgf=9.8N<br>*** 1 cfm = 1.7 $m^3$/h | | | | | | |

## Comparative Examples 1 to 5

The procedures were performed in the same manner as described in Examples 1 to 5, excepting that polyester fabrics were prepared under the conditions given in the following table 3.

[Table 3]

| Div. | Comparative Examples | | | | |
|---|---|---|---|---|---|
| | 1 | 2 | 3 | 4 | 5 |
| PET content (mol%) | 100 | 100 | 100 | 100 | 100 |
| Intrinsic viscosity (dl/g) of PET chip | 0.80 | 0.82 | 0.84 | 0.82 | 0.84 |
| CEG content (meq/kg) of PET chip | 50 | 47 | 43 | 47 | 43 |
| Spinning temperature (°C) | 301 | 302 | 305 | 302 | 305 |
| Draw ratio | 4.75 | 4.77 | 4.85 | 4.85 | 4.88 |
| Intrinsic viscosity (dl/g) of fiber | 0.61 | 0.63 | 0.65 | 0.63 | 0.65 |
| Toughness ($J/m^3$) of fiber | 53 | 54 | 56 | 54 | 58 |
| Young's modulus (g/de) at 1% elongation* | 115 | 119 | 125 | 119 | 125 |

(continued)

| Div. | Comparative Examples | | | | |
|---|---|---|---|---|---|
| | 1 | 2 | 3 | 4 | 5 |
| Young's modulus (g/de) at 2% elongation* | 85 | 91 | 93 | 91 | 93 |
| Tensile strength (g/de) of fiber* | 6.5 | 6.8 | 7.0 | 6.9 | 7.2 |
| Breaking elongation (%) of fiber | 10 | 11 | 11 | 11 | 12 |
| Dry shrinkage (%) | 15.5 | 15 | 13.7 | 15 | 13.7 |
| Filament fineness (DPF)** | 7.92 | 7.92 | 7.92 | 7.22 | 7.22 |
| Total fineness (de)*** | 190 | 190 | 190 | 260 | 260 |
| Filament count | 24 | 24 | 24 | 36 | 36 |
| Weave density (warp × weft) | 76x76 | 76x76 | 76x76 | 66x66 | 66x66 |
| Weaving type | Plain weaving | Plain weaving | Plain weaving | Plain weaving | Plain weaving |
| Heat treatment/vulcanization Temperature (°C) | 160 | 165 | 160 | 165 | 165 |
| Rubber component | Liquid silicone | Liquid silicone | Liquid silicone | Liquid silicone | Liquid silicone |
| Rubber coating weight (g/m$^2$) | 25 | 25 | 25 | 25 | 25 |
| * 1 g/de = 8.8 cN/tex <br> ** 1 DPF (denier per filament) = 0.11 tex per filament <br> *** 1 de = 0.11 tex | | | | | |

The property measurements of the polyester fabrics prepared in Comparative Examples 1 to 5 are presented in the following table 4.

[Table 4]

| Div. | | Comparative Examples | | | | |
|---|---|---|---|---|---|---|
| | | 1 | 2 | 3 | 4 | 5 |
| Warp tensile strength $T_1$ (kgf/inch)* | | 78 | 78 | 80 | 92 | 93 |
| Warp tear strength $T_2$ (kgf) / uncoated** | | 4.2 | 4.2 | 4.3 | 5.3 | 5.4 |
| Warp tear strength $T_2$ (kgf) / coated** | | 20 | 20.3 | 20.5 | 24 | 25 |
| $T_1/T_2$ (uncoated) | | 18.1 | 18.1 | 18.6 | 17.4 | 17.2 |
| $T_1/T_2$ (coated) | | 3.90 | 3.84 | 3.90 | 3.83 | 3.72 |
| Warp edge comb resistance $E_1$ (N) | | 175 | 176 | 178 | 188 | 189 |
| Weft edge comb resistance $E_2$ (N) | | 180 | 183 | 188 | 193 | 197 |
| $E_1+E_2$ | | 355 | 359 | 366 | 381 | 386 |
| Cover factor of fabric | | 2095 | 2095 | 2095 | 2128 | 2128 |
| Toughness (kJ/m$^3$) of fabric | | 1.40 | 1.41 | 1.41 | 1.45 | 1.46 |
| Breaking elongation (%) of fabric | | 19 | 19 | 19.2 | 20.5 | 21 |
| Shrinkage (%) of fabric | | 1.3 | 1.3 | 1.2 | 1.2 | 1.1 |
| Stiffness (kgf)** | Warp | 1.6 | 1.6 | 1.66 | 1.75 | 1.76 |
| | Weft | 1.63 | 1.66 | 1.70 | 1.80 | 1.83 |

(continued)

| Div. | | Comparative Examples | | | | |
|---|---|---|---|---|---|---|
| | | 1 | 2 | 3 | 4 | 5 |
| Thickness (mm) | | 210 | 210 | 211 | 22 | 225 |
| Static air permeability (cfm)*** | $\Delta P$ = 125 pa | 1.60 | 1.60 | 1.60 | 2.15 | 2.16 |
| | $\Delta P$ = 500 pa | 11.0 | 11.0 | 10.8 | 15.0 | 14.8 |
| * 1 kgf/inch = 3.86 N/cm<br>** 1 kgf = 9.8 N<br>***1 cfm = 1.7 $m^3$/h | | | | | | |

As shown in Tables 2 and 4, relative to the polyester fabrics of Comparative Examples 1 to 5 using the conventional polyester fiber, the polyester fabrics of Examples 1 to 5 using a low-modulus polyester fiber with high strength and high elongation to optimize the ratio of tensile strength to tear strength had good mechanical properties and enhanced properties, such as shrinkage, stiffness, and air permeability.

Referring to Table 2, the polyester fabrics of Examples 1 to 5 exhibited optimized properties, including tensile strength $T_1$ of 40 to 87 kN/m (103 to 225 kgf/inch), tear strength $T_2$ of 27 to 77 N/cm (6.9 to 20 kgf) for an uncoated fabric and 85 to 127 N/cm (22 to 33 kgf) for a coated fabric, and the ratio ($T_1/T_2$) of tensile strength $T_1$ to tear strength $T_2$ in the range of 4.7 to 14.9, resulting in good characteristics, such as stiffness of 1.83 to 3.40 kJ/$m^3$, warp/weft edge comb resistance of 265 to 340 N, cover factor of 2,053 to 2,183, and shrinkage of 0.4 to 0.5 %. Besides, the stiffness of the polyester fabrics of Examples 1 to 5 in the optimized range of 6.4 to 8.6 N (0.65 to 0.88 kgf) led to good properties, such as high dimensional stability, good mechanical properties, and good folding and packing properties. Further, the polyester fabrics of Examples 1 to 5 used a low-modulus, low-fineness fiber with high strength and high elongation and thus exhibited a static air permeability of 0.5 to 2.4 $m^3$/h (0.3 to 1.4 cfm) ($\Delta P$ = 125 pa) or 12 to 16 $m^3$/h (7.3 to 9.5 cfm) ($\Delta P$ = 500 pa), resulting in good packaging performance.

Contrarily, as shown in Table 4, the polyester fabrics of Comparative Examples 1 to 5 using a high-modulus polyester fiber with low strength and low elongation were unsatisfactory in achieving such good properties. More specifically, the polyester fabrics of Comparative Examples 1 to 5 had drastic deterioration in the properties, such as, for example, stiffness of 1.4 to 1.46 kJ/$m^3$, warp/weft edge comb resistance of 175 to 197 N, and shrinkage of 1.1 to 1.3 %. The use of the fabrics drastically deteriorated in mechanical properties, such as tensile strength and edge comb resistance, can lead to the rupture of an airbag during unfolding. Furthermore, the uncoated fabrics of Comparative Example 1 to 5 showed air permeability greatly increased to 2.7 to 3.67 $m^3$/h (1.60 to 2.16 cfm) and hence deterioration of the packaging performance, in which case the airbag is susceptible to air leakage during unfolding and fails to deploy.

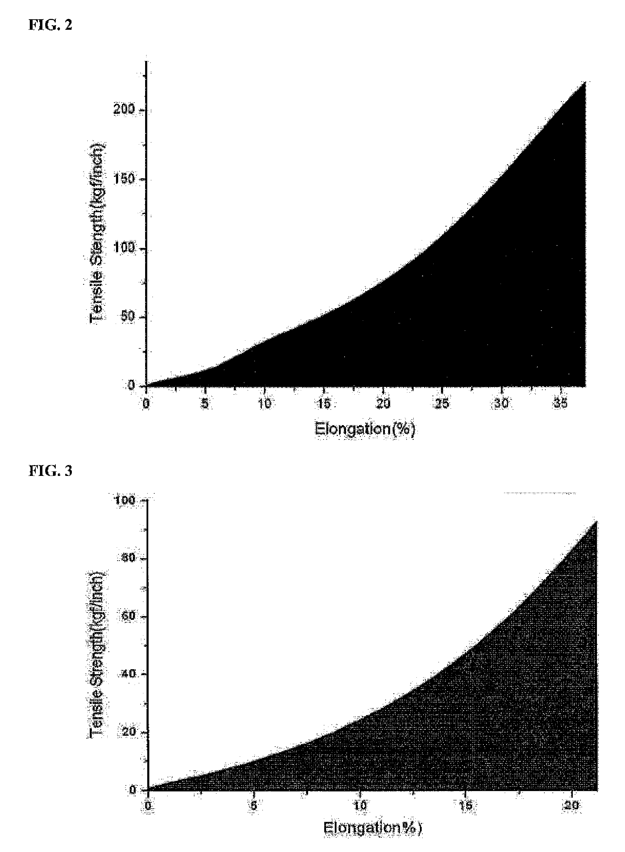

FIGS. 2 and 3 show the strength-elongation curves of the polyester fabrics according to Example 5 and Comparative Example 5, respectively. As can be seen in the strength-elongation curve of FIG. 2, the polyester fabric of Example 5 had high stiffness and low Young's modulus. In contrast, as shown in the strength-elongation curve of FIG. 3, the polyester fabric of Comparative Example 5 had low stiffness and high Young's modulus.

Accordingly, the polyester fabric of Example 5 was superior in both the packaging performance of air cushions and the ability to absorb the energy of the high temperature high pressure gas ejected from the inflator in the event of airbag unfolding. In contrast, the polyester fabric of Comparative Example 5 was unsatisfactory in the ability to absorb the impact energy of the gas instantaneously ejected upon the airbag unfolding and deteriorated in the air sealing effect, so it was considered unsuitable for use as an airbag fabric.

**Claims**

1. A polyester fabric for an airbag having a stiffness of 12 N (1.2 kgf) or less as measured according to ASTM D 4032 method, a tensile strength $T_1$ of at least 37 kN/m (95 kgf/inch) as measured according to ASTM D 5034 method, and a tear strength $T_2$ of at least 64 N (6.5 kgf) as measured according to ASTM D 2261 TONGUE method, wherein the ratio $T_1/T_2$ of the tensile strength $T_1$ to the tear strength $T_2$ is defined by the following calculation formula 1; wherein the polyester fabric has a warp edge comb resistance $E_1$ of at least 200 N as measured at room temperature according to ASTM D 6479 method, and a weft edge comb resistance $E_2$ of at least 200 N as measured at room temperature according to ASTM D 6479 method, wherein the sum of the warp edge comb resistance $E_1$ and the weft edge comb resistance $E_2$ is defined by the following calculation formula 2:

[Calculation Formula 1]

$$4.0 \leq T_1/T_2 \leq 16.5$$

[Calculation Formula 2]

$$400 \leq E_1 + E_2 \leq 900$$

wherein $T_1$ is the warp tensile strength (kN/m) of the polyester fabric; and $T_2$ is the warp tear strength (N) of the polyester fabric; $E_1$ is the warp edge comb resistance (N) of the polyester fabric; and $E_2$ is the weft edge comb resistance (N) of the polyester fabric; and

wherein the polyester fabric is woven and comprises a polyester fiber having a fineness of 22.2 to 43.9 tex (200 to 395 denier), and having Young's modulus at 1% elongation in the range of 6.6 to 8.4 N/tex (75 to 95 g/de), and Young's modulus at 2% elongation in the range of 2.2 to 4.8 N/tex (25 to 55 g/de), wherein the Young's modulus is measured according to ASTM D 885 method.

2. The polyester fabric as claimed in claim 1, wherein the polyester fabric has the warp edge comb resistance $E_1$ of 250 to 400 N, and the weft edge comb resistance $E_2$ of 250 to 400 N, and
wherein the sum of the warp edge comb resistance $E_1$ and the weft edge comb resistance $E_2$ is 500 to 800 N.

3. The polyester fabric as claimed in claim 1, wherein the polyester fabric comprises a polyester fiber having a fineness of 25.6 to 43.3 tex (230 to 390 denier).

4. The polyester fabric as claimed in claim 1, wherein the polyester fabric has a cover factor of 1,800 to 2,300 as defined by the following calculation formula 3:

[Calculation Formula 3]

Cover factor (CF)

$$= \text{warp density (thread/inch)} \times \sqrt{warp\ denier} + \text{weft density (thread/inch)} \times$$

$$\sqrt{weft\ denier}$$

5. The polyester fabric as claimed in claim 1, wherein the polyester fabric has a stiffness of 9.8 N (1.0 kgf) or less as measured according to ASTM D 4032 method.

6. The polyester fabric as claimed in claim 1, wherein the polyester fabric has a static air permeability of 4.3 m³/h (2.5 cfm) or less with ΔP of 125 pa, and 17 m³/h (10 cfm) or less with ΔP of 500 pa, as measured according to ASTM D 737 method.

7. The polyester fabric as claimed in claim 1, wherein the polyester fabric comprises a polyester fiber having a breaking elongation of 14 to 23 % and a dry shrinkage of 1.0 to 6.5%.

8. The polyester fabric as claimed in claim 1, wherein the polyester fabric comprises a polyester fiber having Young's modulus at 1% elongation in the range of 7.0 to 8.1 N/tex (80 to 92 g/de), and Young's modulus at 2% elongation in the range of 2.4 to 4.4 N/tex (27 to 50 g/de), wherein the Young's modulus is measured according to ASTM D 885 method.

9. The polyester fabric as claimed in claim 1, wherein the polyester fabric is coated with at least one rubber component selected from the group consisting of powdered silicone rubber, liquid silicone rubber, polyurethane, chloroprene, neoprene rubber, and emulsion type silicone resin.

10. The polyester fabric as claimed in claim 9, wherein the coating weight per unit area of the rubber component is 20

to 200 g/m$^2$.

**11.** A method for preparing the polyester fabric as claimed in any one of claims 1 to 10, comprising:

weaving a polyester fiber having a fineness of 22.2 to 43.9 tex (200 to 395 denier) into a grey fabric for airbag;
scouring the grey fabric for airbag; and
tentering the scoured fabric at a heat treatment temperature of 140 to 210 °C, and
wherein the polyester fiber has a tensile strength of 76 cN/tex (8.6 g/d) or greater, a breaking elongation of 14 % or greater, and a dry shrinkage of 1.0 % or greater.

**12.** The method as claimed in claim 11, wherein the tentering step is carried out at a heat treatment temperature of 160 to 200 °C.

**13.** An airbag for vehicle comprising the polyester fabric as claimed in any one of claims 1 to 10.

**14.** The airbag for vehicle as claimed in claim 13, wherein the airbag is a frontal airbag or a side curtain airbag.

**15.** The polyester fabric as claimed in claim 1, wherein the polyester fabric has the tensile strength T, of at least 39 kN/m (100 kgf/inch), and the tear strength $T_2$ of 69 to 186 N (7.0 to 19 kgf), the ratio $T_1/T_2$ of 4.30 to 15.0.

**16.** The polyester fabric as claimed in claim 1, wherein the tear strength $T_2$ for an uncoated fabric is 69 to 186 N (7.0 to 19 kgf).

**17.** The polyester fabric as claimed in claim 1, wherein the tear strength $T_2$ for a coated fabric is 216 to 392 N (22 to 40 kgf).


**Patentansprüche**

**1.** Polyestergewebe für einen Airbag mit einer Steifigkeit von 12 N (1,2 kgf) oder weniger, gemessen gemäß der ASTM D 4032-Methode, einer Zugfestigkeit $T_1$ von mindestens 37 kN/m (95 kgf/inch), gemessen gemäß der ASTM D 5034-Methode, und einer Reißfestigkeit $T_2$ von mindestens 64 N (6,5 kgf), gemessen gemäß der ASTM D 2261 TONGUE-Methode, wobei das Verhältnis $T_1/T_2$ der Zugfestigkeit $T_1$ zu der Reißfestigkeit $T_2$ durch die nachfolgende Berechnungsformel 1 definiert ist;
wobei das Polyestergewebe eine Kettrand-Kammbeständigkeit $E_1$ von mindestens 200 N, gemessen bei Raumtemperatur gemäß der ASTM D 6479-Methode, und eine Schussrand-Kammbeständigkeit $E_2$ von mindestens 200 N, gemessen bei Raumtemperatur gemäß der ASTM D 6479-Methode, hat, wobei die Summe aus der Kettrand-Kammbeständigkeit $E_1$ und der Schussrand-Kammbeständigkeit $E_2$ durch die nachfolgende Berechnungsformel 2 definiert ist:

$$[\text{Berechnungsformel 1}]$$
$$4{,}0 \leq T_1/T_2 \leq 16{,}5$$

$$[\text{Berechnungsformel 2}]$$
$$400 \leq E_1 + E_2 \leq 900$$

worin $T_1$ die Kett-Zugfestigkeit (kN/m) des Polyestergewebes ist; und $T_2$ die Kett-Reißfestigkeit (N) des Polyestergewebes ist; $E_1$ die Kettrand-Kammbeständigkeit (N) des Polyestergewebes ist; und $E_2$ die Schussrand-Kammbeständigkeit (N) des Polyestergewebes ist; und
wobei des Polyestergewebe gewebt ist und eine Polyesterfaser mit einer Feinheit von 22,2 bis 43,9 tex (200 bis 395 denier) und mit einem Young-Modul bei 1 % Dehnung im Bereich von 6,6 bis 8,4 N/tex (75 bis 95 g/de) und einem Young-Modul bei 2 % Dehnung im Bereich von 2,2 bis 4,8 N/tex (25 bis 55g/de) umfasst, wobei der Young-Modul gemäß der ASTM D 885-Methode gemessen wird.

**2.** Polyestergewebe nach Anspruch 1, wobei das Polyestergewebe die Kettrand-Kammbeständigkeit $E_1$ von 250 bis 400 N und die Schussrand-Kammbeständigkeit $E_2$ von 250 bis 400 N aufweist, und wobei die Summe aus der

Kettrand-Kammbeständigkeit $E_1$ und der Schussrand-Kammbeständigkeit $E_2$ 500 bis 800 N beträgt.

3. Polyestergewebe nach Anspruch 1, wobei das Polyestergewebe eine Polyesterfaser mit einer Feinheit von 25,6 bis 43,3 tex (230 bis 390 denier) umfasst.

4. Polyestergewebe nach Anspruch 1, wobei das Polyestergewebe einen Bedeckungsfaktor von 1.800 bis 2.300 aufweist, definiert durch die nachfolgende Berechnungsformel 3:

[Berechnungsformel 3]

Bedeckungsfaktor (CF)

$= \text{Kett-Dichte (Faden/inch)} \times \sqrt{Kett - Denier} + \text{Schuss-Dichte (Faden/inch)} \times$

$\sqrt{Schuss - Denier}$

5. Polyestergewebe nach Anspruch 1, wobei das Polyestergewebe eine Steifigkeit von 9,8 N (1,0 kgf) oder weniger aufweist, gemessen gemäß der ASTM D 4032-Methode.

6. Polyestergewebe nach Anspruch 1, wobei das Polyestergewebe eine statische Luftpermeabilität von 4,3 $m^3$/h (2,5 cfm) oder weniger mit $\Delta P$ von 125 pa, und 17 $m^3$/h (10 cfm) oder weniger mit $\Delta P$ von 500 pa aufweist, gemessen gemäß der ASTM D 737-Methode.

7. Polyestergewebe nach Anspruch 1, wobei das Polyestergewebe eine Polyesterfaser mit einer Bruchdehnung von 14 bis 23 % und einer Trockenschrumpfung von 1,0 bis 6,5 % umfasst.

8. Polyestergewebe nach Anspruch 1, wobei das Polyestergewebe eine Polyesterfaser mit einem Young-Modul bei 1 % Dehnung im Bereich von 7,0 bis 8,1 N/tex (80 bis 92 g/de) und einem Young-Modul bei 2 % Dehnung im Bereich von 2,4 bis 4,4 N/tex (27 bis 50 g/de) umfasst, wobei der Young-Modul gemäß der ASTM D 885-Methode gemessen wird.

9. Polyestergewebe nach Anspruch 1, wobei das Polyestergewebe beschichtet ist mit mindestens einer Kautschukkomponente, gewählt aus der Gruppe, bestehend aus pulverförmigem Silikonkautschuk, flüssigem Silikonkautschuk, Polyurethan, Chloropren, Neoprenkautschuk und Silikonharz vom Emulsionstyp.

10. Polyestergewebe nach Anspruch 9, wobei das Beschichtungsgewicht pro Flächeneinheit der Kautschukkomponente 20 bis 200 $g/m^2$ beträgt.

11. Verfahren zur Herstellung des Polyestergewebes nach mindestens einem der Ansprüche 1 bis 10, umfassend:

Weben einer Polyesterfaser mit einer Feinheit von 22,9 bis 43,9 tex (200 bis 395 denier) zu einem Rohgewebe für Airbag;
Reinigen des Rohgewebes für Airbag; und
Spannen des gereinigten Gewebes bei einer Wärmebehandlungstemperatur von 140 bis 210 °C, und wobei die Polyesterfaser eine Zugfestigkeit von 76 cN/tex (8,6 g/d) oder größer, eine Bruchdehnung von 14 % oder größer und eine Trockenschrumpfung von 1,0 % oder größer aufweist.

12. Verfahren nach Anspruch 11, wobei der Spannschritt bei einer Wärmebehandlungstemperatur von 160 bis 200 °C durchgeführt wird.

13. Airbag für ein Fahrzeug, umfassend das Polyestergewebe gemäß mindestens einem der Ansprüche 1 bis 10.

14. Airbag für ein Fahrzeug nach Anspruch 13, wobei der Airbag ein Frontairbag oder ein Seitenairbag ist.

15. Polyestergewebe nach Anspruch 1, wobei das Polyestergewebe die Zugfestigkeit $T_1$ von mindestens 39 kN/m (100 kgf/inch) und die Reißfestigkeit $T_2$ von 69 bis 186 N (7,0 bis 19 kgf) aufweist, wobei das Verhältnis $T_1/T_2$ 4,30 bis 15,0 beträgt.

**16.** Polyestergewebe nach Anspruch 1, wobei die Reißfestigkeit $T_2$ für ein unbeschichtetes Gewebe 69 bis 186 N (7,0 bis 19 kgf) beträgt.

**17.** Polyestergewebe nach Anspruch 1, wobei die Reißfestigkeit $T_2$ für ein beschichtetes Gewebe 216 bis 392 N (22 bis 40 kgf) beträgt.

**Revendications**

**1.** Un tissu de polyester pour un coussin gonflable ayant une rigidité de 12 N (1,2 kgf) ou moins tel que mesuré selon le procédé ASTM D 4032, une résistance à la traction $T_1$ d'au moins 37 kN/m (95 kgf/inch) tel que mesuré selon le procédé ASTM D 5034, et une résistance au déchirement $T_2$ d'au moins 64 N (6,5 kgf) tel que mesuré selon le procédé TONGUE ASTM D 2261, dans lequel le rapport $T_1/T_2$ de la résistance à la traction $T_1$ à la résistance au déchirement $T_2$ est défini par la formule de calcul 1 suivante;
dans lequel le tissu de polyester a une résistance au peignage de bord de chaine $E_1$ d'au moins 200 N tel que mesuré à température ambiante selon le procédé ASTM 6479, et une résistance au peignage de bord de trame $E_2$ d'au moins 200 N tel que mesuré à température ambiante selon le procédé ASTM 6479, dans lequel la somme de la résistance au peignage de bord de chaine $E_1$ et de la résistance au peignage de bord de trame $E_2$ est défini par la formule de calcul 2 suivante:

[Formule de calcul 1]
$$4,0 < T_i/T_2 < 16,5$$

[Formule de calcul 2]
$$400 < E_I + E_2 < 900$$

dans lesquelles $T_1$ est la résistance à la traction de la chaine (kN/m) du tissu de polyester; et $T_2$ est la résistance au déchirement de la chaine (N) du tissu de polyester; $E_1$ est la résistance au peignage de bord de chaine (N) du tissu de polyester; et $E_2$ est la résistance au peignage de bord de trame (N) du tissu de polyester; et
dans lequel le tissu de polyester est tissé et comprend une fibre de polyester ayant une finesse de 22,2 à 43,9 tex (200 à 395 denier), et a un module de Young à 1% d'élongation dans la plage de 6,6 à 8,4 N/tex (75 à 95 g/de), et un module de Young à 2% d'élongation dans la plage de 2,2 à 4,8 N/tex (25 à 55 g/de), dans lequel le module de Young est mesuré selon le procédé ASTM D 885.

**2.** Le tissu de polyester tel que revendiqué dans la revendication 1, dans lequel le tissu de polyester a la résistance au peignage de bord de chaine $E_1$ de 250 à 400 N, et la résistance au peignage de bord de trame $E_2$ de 250 à 400 N, et dans lequel la somme de la résistance au peignage de bord de chaine $E_1$ et la résistance au peignage de bord de trame $E_2$ est de 500 à 800 N.

**3.** Le tissu de polyester tel que revendiqué dans la revendication 1, dans lequel le tissu de polyester comprend une fibre de polyester ayant une finesse de 25,6 à 43,3 tex (230 à 390 denier).

**4.** Le tissu de polyester tel que revendiqué dans la revendication 1, dans lequel le tissu de polyester a un facteur de couverture de 1.800 à 2.300 tel que défini par la formule de calcul 3 suivante:

[Formule de calcul 3]
facteur de couverture (CF)

$$= densité\ de\ la\ chaine\left(\frac{fil}{inch}\right) \times \sqrt{denier\ de\ la\ chaine}\ +\ densité\ de\ la\ trame\ \times$$

$$\sqrt{denier\ de\ la\ trame}\ .$$

**5.** Le tissu de polyester tel que revendiqué dans la revendication 1, dans lequel le tissu de polyester a une rigidité de 9,8 N (1,0 kgf) ou moins tel que mesuré selon le procédé ASTM D 4032.

6. Le tissu de polyester tel que revendiqué dans la revendication 1, dans lequel le tissu de polyester a une perméabilité à l'air statique de 4,3 m$^3$/h (2,5 cfm) ou moins avec une PA de 125 pa, et de 17 m$^3$/h (10 cfm) ou moins avec une PA de 500 pa, tel que mesuré selon le procédé ASTM D 737.

7. Le tissu de polyester tel que revendiqué dans la revendication 1, dans lequel le tissu de polyester comprend une fibre de polyester ayant un allongement de rupture de 14 à 23 % et un rétrécissement à sec de 1,0 à 6,5 %.

8. Le tissu de polyester tel que revendiqué dans la revendication 1, dans lequel le tissu de polyester comprend une fibre de polyester ayant un module de Young à 1% d'élongation dans la plage de 7,0 à 8,1 N/tex (80 à 92 g/de), et un module de Young à 2% d'élongation dans la plage de 2,4 à 4,4 N/tex (27 à 50 g/de), dans lequel le module de Young est mesuré selon le procédé ASTM D 885.

9. Le tissu de polyester tel que revendiqué dans la revendication 1, dans lequel le tissu de polyester est revêtu avec au moins un composant de caoutchouc choisi parmi le groupe constitué par du caoutchouc de silicone en poudre, du caoutchouc de silicone liquide, du polyuréthane, du chloroprène, du caoutchouc de néoprène, et de la résine de silicone de type émulsion.

10. Le tissu de polyester tel que revendiqué dans la revendication 9, dans lequel le poids de revêtement par unité de surface du composant de caoutchouc est de 20 à 200 g/m$^2$.

11. Procédé pour la fabrication du tissu de polyester tel que revendiqué dans l'une quelconque des revendications 1 à 10, comprenant:

le tissage d'une fibre de polyester ayant une finesse de 22,2 à 43,9 tex (200 à 395 denier) en un tissu gris pour coussin gonflable;
le décreusage du tissu gris pour coussin gonflable; et
le serrage du tissu décreusé at a une température de traitement thermique de 140 à 210 °C, et
dans lequel la fibre de polyester a une résistance à la traction de 76 cN/tex (8,6 g/d) ou plus, un allongement de rupture de 14 % ou plus, et un rétrécissement à sec de 1,0% ou plus.

12. Le procédé tel que revendiqué dans la revendication 11, dans lequel l'étape de serrage est effectué à une température de traitement thermique de 160 à 200 °C.

13. Coussin gonflable pour un véhicule comprenant le tissu de polyester tel que revendiqué dans l'une quelconque des revendications 1 à 10.

14. Le coussin gonflable pour un véhicule tel que revendiqué dans la revendication 13, dans lequel le coussin gonflable est un coussin gonflable frontal ou un coussin gonflable latéral en rideaux.

15. Le tissu de polyester tel que revendiqué dans la revendication 1, dans lequel le tissu de polyester a une résistance à la traction $T_1$ d'au moins 39 kN/m (100 kgf/inch), et une résistance au déchirement $T_2$ de 69 à 186 N (7,0 à 19 kgf), le rapport $T_1/T_2$ de 4,30 à 15,0.

16. Le tissu de polyester tel que revendiqué dans la revendication 1, dans lequel une résistance au déchirement $T_2$ pour un tissu non revêtu est de 69 à 186 N (7,0 à 19 kgf).

17. Le tissu de polyester tel que revendiqué dans la revendication 1, dans lequel lune résistance au déchirement $T_2$ pour un tissu revêtu est de 216 à 392 N (22 à 40 kgf).

FIG. 1

**FIG. 2**

**FIG. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI04214437 B
- WO 2010123298 A2
- DE 4401003 A1
- WO 2010027228 A2